(19) Europäisches Patentamt
European Patent Office
Office européen des brevets

(11) **EP 1 967 887 A1**

(12) **EUROPÄISCHE PATENTANMELDUNG**

(43) Veröffentlichungstag:
**10.09.2008 Patentblatt 2008/37**

(51) Int Cl.:
***G02B 21/06*** *(2006.01)*

(21) Anmeldenummer: 08102291.5

(22) Anmeldetag: **05.03.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **06.03.2007 DE 102007011305**

(71) Anmelder: **Leica Microsystems CMS GmbH 35578 Wetzlar (DE)**

(72) Erfinder:
• **Birk, Holger
74909, Meckesheim (DE)**

• **Dyba, Marcus
68167, Mannheim (DE)**
• **Gugel, Hilmar
69221, Dossenheim (DE)**
• **Seyfried, Volker
69226, Nussloch (DE)**

(74) Vertreter: **Hassenbürger, Anneliese
Leica Microsystems GmbH
Corporate Patents + Trademarks Department
Ernst-Leitz-Strasse 17-37
35578 Wetzlar (DE)**

(54) **Vorrichtung und Verfahren zur Strahljustage in einem optischen Strahlengang**

(57) Eine Vorrichtung zur Strahljustage in einem optischen Strahlengang mit mindestens zwei voneinander unabhängigen Lichtquellen (1, 2), insbesondere in einem Strahlengang (8, 9) eines vorzugsweise hoch- bzw. höchstauflösenden Mikroskops, wobei die Strahlen der Lichtquellen (1, 2) in einem gemeinsamen Beleuchtungsstrahlengang (10) zu überlagern sind, ist dadurch gekennzeichnet, dass ein Kalibrierpräparat (22) in den Beleuchtungsstrahlengang (10) ein- und aus diesem ausbringbar ist, anhand dessen die Pupillen- und/oder Fokuslage der Strahlen überprüfbar ist. Ein entsprechendes Verfahren nutzt die erfindungsgemäße Vorrichtung.

**Fig. 1**

EP 1 967 887 A1

## Beschreibung

Die Erfindung betrifft eine Vorrichtung zur Strahljustage in einem optischen Strahlengang mit mindestens zwei voneinander unabhängigen Lichtquellen, insbesondere in einem Strahlengang eines vorzugsweise hoch- bzw. höchstauflösenden Mikroskops, wobei die Strahlen der Lichtquellen in einem gemeinsamen Beleuchtungsstrahlengang zu überlagern sind.

Des Weiteren betrifft die Erfindung ein entsprechendes Verfahren, insbesondere zur Anwendung der erfindungsgemäßen Vorrichtung.

Gattungsbildende Vorrichtungen, mit denen das Licht von mindestens zwei voneinander unabhängigen Lichtquellen in einen gemeinsamen Strahlengang vereint werden, sind aus der Praxis bekannt. Üblicherweise wird dort die Strahllage justiert, indem man mit den zu überlagernden Strahlen eine Probe mit äußerst kleinen Strukturen abbildet. Dazu verwendet man u.a. sogenannte "Beads", die einen Durchmesser von 20 nm bis 1 μm haben. Diese sehr kleinen Strukturen werden mikroskopisch abgebildet, wobei man versucht, die zugehörigen Bilder deckungsgleich zu überlagern. Die Justage der Strahlen erfolgt durch manuelles Einstellen von Kippwinkeln und Parallelversatz.

Die bekannte Vorrichtung und das entsprechend angewandte Verfahren eignen sich insbesondere bei hoch- bzw. höchstauflösenden Mikroskopie-Verfahren wie beispielsweise STED (vgl. EP 0 801 759 B1), 4Pi (vgl. EP 0 491 289 B1), RESOLFT (vgl. US 7,064,824 B2 und WO 2004/090617 A2), PALM (vgl. WO 2006/127692 A2) und Upconversion (vgl. US 6,859,313 B2) nicht oder allenfalls bedingt, da dort die Anforderungen an die Genauigkeit und die mechanischen Driften so groß sind, dass die Justagen - per Hand - ausgeschlossen sind, zumindest aber in regelmäßigen Abständen, d.h. bereits nach wenigen Stunden oder Tagen des Betriebs wiederholt werden müssen.

Eine Strahljustage entsprechend den voranstehenden Ausführungen erfordert ein spezielles Kalibrierpräparat, wobei die eigentlich zu untersuchende Probe entfernt werden muss. Die zur Kalibrierung verwendeten Bead-Proben sind in der Handhabung schwierig, da sie zu Verklumpungen neigen. Außerdem ist es schwierig, den Fokus zu finden. Herkömmliche Justagen sind zeitaufwendig und erfordern viel Geschick und Know-how vom Anwender. Dies führt in der Praxis nicht selten dazu, dass die Justagen nur von ausgewählten Personen, mit entsprechender Erfahrung, vorgenommen werden können. Ein weiterer wesentlicher Nachteil der bekannten Justagetechnik ist darin zu sehen, dass aufgrund des erforderlichen Probenwechsels Langzeitmessungen, die eine zwischenzeitliche Justage erfordern, von vorneherein ausgeschlossen sind, nämlich aufgrund der obligatorischen Entfernung der Probe zum Zwecke der Justage.

Im Lichte der voranstehenden Ausführungen liegt der vorliegenden Erfindung die Aufgabe zugrunde, eine Vorrichtung zur Strahljustage in einem optischen Strahlengang mit mindestens zwei voneinander unabhängigen Lichtquellen, insbesondere in einem Strahlengang eines vorzugsweise hoch- bzw. höchstauflösenden Mikroskops, derart auszugestalten und weiterzubilden, dass mit einfachen Mitteln eine zuverlässige Justage auch während des Mikroskopbetriebs möglich ist. Ein entsprechendes Verfahren ist anzugeben.

Die erfindungsgemäße Vorrichtung löst die voranstehende Aufgabe durch die Merkmale des Patentanspruchs 1. Danach ist die Vorrichtung dadurch gekennzeichnet, dass ein Kalibrierpräparat in den Beleuchtungsstrahlengang ein- und aus diesem ausbringbar ist, anhand dessen die Pupillen- und/oder Fokuslage der Strahlen überprüfbar ist/sind. Das erfindungsgemäße Verfahren löst die voranstehende Aufgabe durch die Merkmale des nebengeordneten Patentanspruchs 21 entsprechend.

Erfindungsgemäß ist erkannt worden, dass es möglich ist, unabhängig von der eigentlichen Nutzung, d.h. im Falle eines hochauflösenden Mikroskops unabhängig von der Probenuntersuchung bzw. Bildaufnahme, die Strahljustage vorzunehmen. Dazu ist ein ganz besonderes Kalibrierpräparat vorgesehen, welches in den Beleuchtungsstrahlengang, d.h. in den gemeinsamen Strahlengang der zu überlagernden Strahlen, ein- und aus diesem ausbringbar ist. Anhand des Kalibrierpräparats wird die Pupillen- und/oder Fokuslage der überlagerten Strahlen überprüft. Die Überlagerung hat dabei so zu erfolgen, dass die Pupillen- und/oder Fokuslage der Strahlen übereinstimmt/übereinstimmen.

Grundsätzlich spielt es keine Rolle, wie das Kalibrierpräparat in den Beleuchtungsstrahlengang ein- und aus diesem ausgebracht wird. Lineare Bewegungen oder aber auch Drehbewegungen eines entsprechenden Präparatehalters sind denkbar. Auch ist es denkbar, dass mehrere Kalibrierpräparate über eine Art Revolver oder Schieber zur Verfügung gestellt werden.

In vorteilhafter Weise wird das Kalibrierpräparat in den Beleuchtungsstrahlengang eingeschwenkt. Dazu lässt sich eine besonders einfache Mimik realisieren. Des Weiteren ist es von Vorteil, wenn das Kalibrierpräparat an der Stelle oder in der Nähe des Zwischenbildes in den Beleuchtungsstrahlengang einbringbar ist. Dabei ist wesentlich, dass die zu untersuchende Probe zur Kalibrierung nicht entfernt werden muss, was insbesondere die Durchführung von Langzeituntersuchungen ermöglicht.

An dieser Stelle sei angemerkt, dass es hier grundsätzlich um die Überlagerung bzw. Vereinigung von mindestens zwei voneinander unabhängigen Lichtstrahlen geht. Mit anderen Worten sind mindestens zwei voneinander unabhängige Lichtquellen und davon ausgehende Strahlen vorgesehen. Die erfindungsgemäße Vorrichtung lässt sich ebenso bei Vereinigung der Lichtstrahlen von mehreren Lichtquellen verwenden und ist entsprechend auszulegen.

In Bezug auf das Kalibrierpräparat ist es von Vorteil, wenn dies eine eindeutig abbildbare Oberflächenstruktur aufweist. Dabei kann es sich um eine definierte, vorzugsweise geordnete oder symmetrische Oberflächenstruktur handeln. Ebenso ist es denkbar, dass die Oberflächenstruktur willkürlich, ungeordnet bzw. symmetrielos ausgeführt ist.

Insbesondere beim Einsatz in höchstauflösenden Mikroskopen ist es von Vorteil, wenn die Oberfläche des Kalibrierpräparats mikrostrukturiert ist. Eine solche äußerst feine Struktur lässt sich beispielsweise durch Sandstrahlen oder Glasperlenstrahlen herstellen.

Die Kalibrierung mittels Kalibrierpräparat erfolgt derart, dass dieses mit den zwei oder mehreren zu justierenden/ zu überlagernden Strahlen beleuchtet und entsprechend abgebildet wird. Zur Detektion des Detektionslichts der zu überlagernden Strahlen lassen sich spektral selektive Detektoren verwenden, um nämlich ein Abbild aus dem Detektionslicht des jeweiligen Strahls zu erhalten. Auch ist es denkbar, dass zur Detektion des Detektionslichts der zu überlagernden Strahlen die Lichtquellen einzeln bzw. sequenziell anschaltbar und deaktivierbar sind. Anstelle eines Ein- und Ausschaltens der Lichtquellen lassen sich auch Shutter verwenden, die den jeweiligen Strahlengang freigeben oder blockieren bzw. schließen.

Wie bereits zuvor erwähnt, sind die aus den jeweiligen Strahlen resultierenden Bilder in Deckung zu bringen. Dazu, d.h. zu Justagezwecken, ist im Falle der Überlagerung zweier Strahlen mindestens ein Stellelement zur Beeinflussung der Pupillen- und/oder Fokuslage zumindest eines der zu vereinigenden Strahlen vorgesehen. Entsprechend ist das Stellelement im Strahlengang eines der Strahlen angeordnet. Bei Vorkehrung mehrerer Stellelemente sind diese in den jeweiligen Strahlengängen angeordnet, die dem gemeinsamen Beleuchtungsstrahlengang vorgeschaltet sind.

Vorzugsweise ist das Stellelement in der Pupille des jeweiligen Strahlengangs oder in der Nähe der Pupille angeordnet. Dies ist insbesondere dann von Vorteil, wenn nur ein Bildversatz korrigiert werden soll. Bei der diesbezüglichen Anordnung wird kein Strahlversatz erzeugt bzw. korrigiert.

Soll dagegen die Korrektur eines Strahlversatzes vorgenommen werden, ist es von Vorteil, wenn das Stellelement in der Nähe eines Zwischenbildes angeordnet ist. Damit eventuelle Verschmutzungen nicht abgebildet werden, ist es von besonderem Vorteil, die Position des Stellelements nicht exakt in das Zwischenbild zu legen. Andere Positionen für das Stellelement sind denkbar, um nämlich sowohl den Winkel als auch die Position einstellen zu können.

Im Konkreten kann es sich bei dem Stellelement um einen Spiegel handeln, der sich vorzugsweise um zwei Achsen drehen bzw. kippen lässt. Insbesondere zur automatischen Strahljustage ist es von weiterem Vorteil, wenn sich das Stellelement, vorzugsweise der Spiegel, motorisiert drehen bzw. bewegen lässt.

Zur Ermittlung des Versatzes der den Strahlen zugeordneten Abbildungen, den es zum Zwecke der Strahlkalibrierung zu eliminieren gilt, kann die Maximalposition einer 2D-Kreuzkorrelation herangezogen werden. Als Messgröße für den Versatz kann die detektierte Intensität des jeweiligen Strahls dienen. Auch ist es denkbar, dass zur Ermittlung der jeweiligen Strahllage teildurchlässige Spiegel und/oder positionsempfindliche Detektoren (PSD, CCD, Beamcatcher - vgl. DE 102 33 074 A1) vorgesehen sind.

Die Verstellvorschrift, um anhand einer gemessenen Abweichung der Strahllagen auf die Korrekturwerte der Stellelemente zu kommen, kann sich aus den bekannten geometrischen Verhältnissen direkt ergeben.

In der Praxis ist es in der Regel einfacher, die Antwort des Systems mittels Testauslenkungen der Stellelemente zu ermitteln. Dazu kann man die Auslenkungen vektoriell beschreiben, z.B. für den Fall, dass zwei um zwei Achsen kippbare Spiegel verwendet werden, als:

$$
T = \begin{pmatrix} t_1 \\ t_2 \\ t_3 \\ t_4 \end{pmatrix} = \begin{pmatrix} Spiegel\,1, Achse\,1 \\ Spiegel\,1, Achse\,2 \\ Spiegel\,2, Achse\,1 \\ Spiegel\,2, Achse\,2 \end{pmatrix}
$$

und legt 4 "Einheits-Testauslenkungen" der

$$
\text{Form:} \begin{pmatrix} 1 \\ 0 \\ 0 \\ 0 \end{pmatrix}, \begin{pmatrix} 0 \\ 1 \\ 0 \\ 0 \end{pmatrix}, \begin{pmatrix} 0 \\ 0 \\ 1 \\ 0 \end{pmatrix}, \begin{pmatrix} 0 \\ 0 \\ 0 \\ 1 \end{pmatrix} \text{ an.}
$$

Für jede Testauslenkung misst man einen "Ant-

$$
\text{wort-Vektor" } X = \begin{pmatrix} x_1 \\ x_2 \\ x_3 \\ x_4 \end{pmatrix} \text{ z.B.}
$$

$$
\begin{pmatrix} Bildversatz\ x \\ Bildversatz\ y \\ Strahlversatz\ x \\ Strahlversatz\ y \end{pmatrix}
$$

und ordnet die

Antwort-Vektoren spaltenweise als "Antwort-Matrix"

$$A = \begin{pmatrix} a_{11} & a_{12} & a_{13} & a_{14} \\ a_{21} & a_{22} & a_{23} & a_{24} \\ a_{31} & a_{32} & a_{33} & a_{34} \\ a_{41} & a_{42} & a_{43} & a_{44} \end{pmatrix}$$

an, so dass für die

Testauslenkungen $A \cdot T = X$ gilt.

Durch Invertierung der so ermittelten Antwort-Matrix lassen sich dann die für jeden beliebigen gewünschten Bild- oder Strahlversatz $X$ notwendige Auslenkungen $T$ bestimmen: $T = A^{-1} \cdot A \cdot T = A^{-1} \cdot X$

Nichtlinearitäten in der Systemantwort machen es in der Regel erforderlich, die Justage in mehreren Iterationen durchzuführen. Gegebenenfalls kann es auch erforderlich sein, die Systemantwort an mehreren Positionen zu ermitteln.

Im vorliegenden Fall wird außerdem zum Ausgleich von mechanischem Spiel die Zielposition der Stellelemente immer aus der gleichen Richtung kommend und in der gleichen Reihenfolge angefahren.

Die in Tests am STED-Aufbau erzielbare Justage-Genauigkeit für den Bildversatz ist besser als 0,5 $\mu$m an der Stelle des Zwischenbildes (15,5 mm /(Zoom 64 * 512 Pixel)), was bei einem 100x-Objektiv einer Genauigkeit < 5 nm auf der Probe entspricht.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigt

Fig. 1  in einer schematischen Ansicht den Strahlengang bei einem STED-Mikroskops mit einer erfindungsgemäßen Vorrichtung, insbesondere zur Nutzung des erfindungsgemäßen Verfahrens,

Fig. 2  ein Ausführungsbeispiel eines in den Beleuchtungsstrahlengang einschwenkbaren Kalibrierpräparats und

Fig. 3  ein Ablauf-Diagramm zur Justage mittels Stellelement.

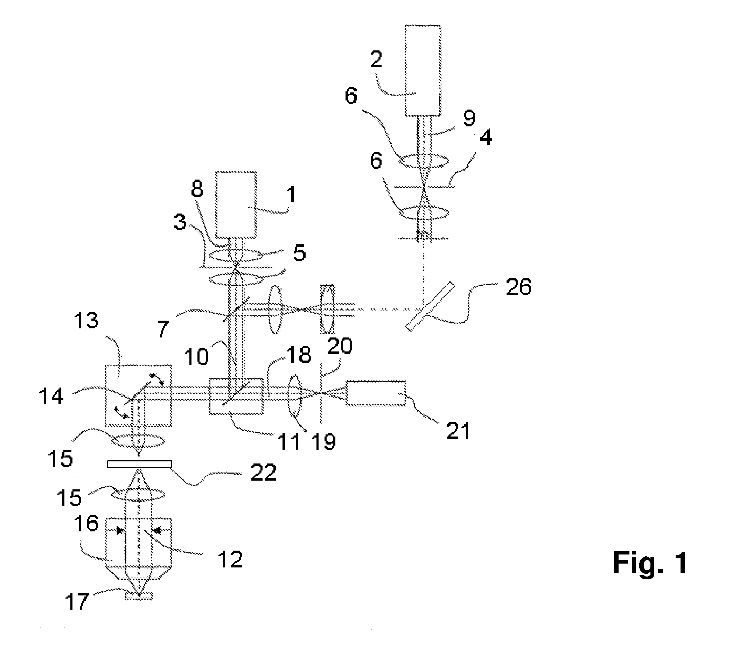

Fig. 1 zeigt in einer schematischen Darstellung den Strahlengang bei der STED-Mikroskopie, dem eine erfindungsgemäße Vorrichtung einverleibt ist.

Bei dem in Fig. 1 gewählten Ausführungsbeispiel sind zwei Lichtquellen 1, 2 vorgesehen, deren Licht in herkömmlicher Weise über eine Beleuchtungslichtblende 3, 4 und ein Linsensystem 5, 6 zu einem Strahlvereiniger 7 gelangt.

Die jeweiligen Strahlen 8, 9 werden über den Strahlvereiniger 7 in den Beleuchtungsstrahlengang 10 vereinigt.

Über einen weiteren Strahlteiler/Strahlvereiniger 11 gelangt das Beleuchtungslicht 12 über eine Scaneinrichtung 13 mit Scanspiegel 14 über eine Linsenanordnung 15 durch ein Objektiv 16 hindurch zur Probe 17.

Das von der Probe 17 zurückkehrende Detektionslicht 18 gelangt über den Scanspiegel 14 und den Strahlteiler/Strahlvereiniger 11 über ein Linsensystem 19 und eine Detektionslichtblende 20 zu einem Detektor 21, wobei es sich dabei vorzugsweise um einen spektral selektiven Detektor 21 handelt.

In erfindungsgemäßer Weise ist ein in den Beleuchtungsstrahlengang 10 ein- und aus diesem ausbringbares Kalibrierpräparat 22 vorgesehen, anhand dessen die Pupillen- und/oder Fokuslage der Strahlen 8, 9 überprüfbar ist.

Fig. 1 zeigt deutlich, dass das Kalibrierpräparat 22 an der Stelle des Zwischenbilds in den Beleuchtungsstrahlengang 10 eingebracht ist.

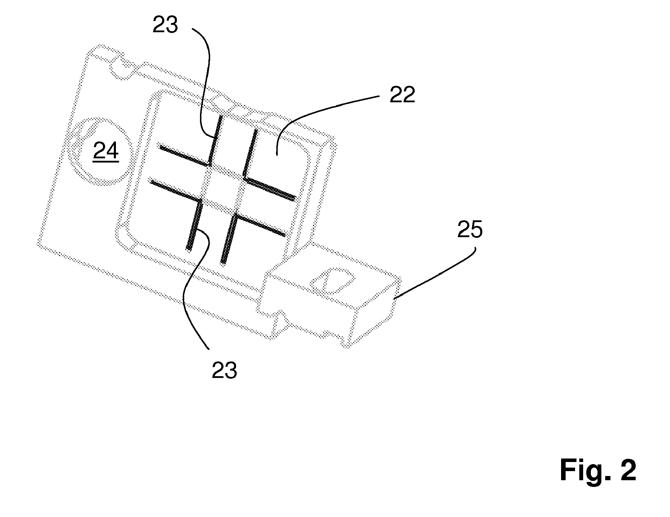

Fig. 2 zeigt ein Ausführungsbeispiel eines möglichen Kalibrierpräparats 22, welches eine symmetrische Oberflächenstruktur 23 aufweist. Ein Durchgang 24 des plattenähnlich ausgebildeten Kalibrierpräparats 22 definiert die Dreh- bzw. Schwenkachse bei entsprechender Aufnahme, die hier nicht gezeigt ist. Ein Anschlag 25 auf der der Drehachse bzw. dem Durchgang 24 gegenüberliegenden Seite dient zur Begrenzung der Drehbewegung und somit als Widerlager zur positionsgenauen Anordnung.

Fig. 2 zeigt des Weiteren, dass es bei dem hier gewählten Ausführungsbeispiel, unter Nutzung von zwei voneinander unabhängigen Lichtquellen 1, 2 ausreicht, wenn lediglich in einem Strahlengang 9 ein Stellelement 26 vorgesehen ist, um nämlich eine Justage des dortigen Strahls vornehmen zu können. Das Stellelement 26 dient zur Beeinflussung der Pupillen- und/oder Fokuslage des Strahls 9, wobei das Stellelement 26 in der Pupille des Strahlengangs bzw. in der Nähe der Pupille oder in der Nähe eines Zwischenbildes angeordnet sein kann. Das Stellelement 26 ist als Spiegel ausgeführt, der sich um zwei Achsen kippen lässt. Die Kippbewegung des Spiegels erfolgt motorisiert, so dass eine automatische Justage möglich ist.

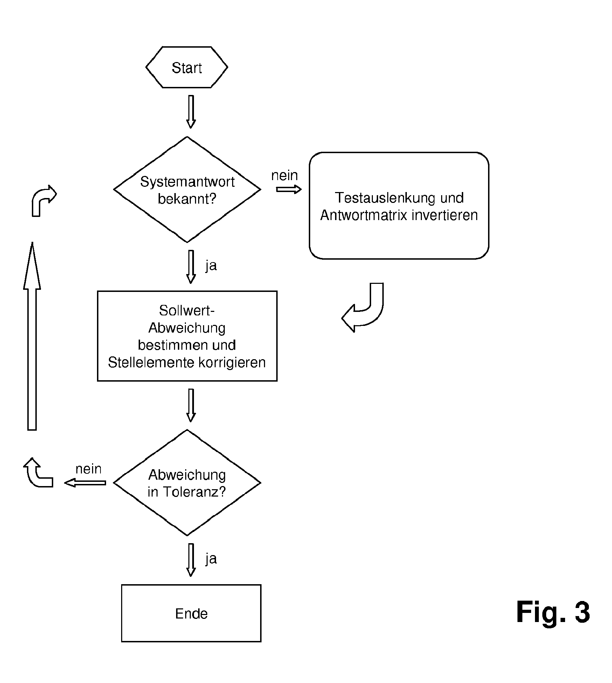

Fig. 3 zeigt ein Ablauf-Diagramm zur Justage des Strahls 9 mittels Stellelement 26. Das Diagramm ist selbsterklärend.

Wird unter Verwendung des Kalibrierpräparats eine außerhalb der Toleranz liegende Abweichung der jeweiligen Bilder festgestellt, so erfolgt, manuell oder automatisch, eine Kalibrierung entsprechend dem dort gezeigten Ablauf unter Nutzung der im allgemeinen Teil der Beschreibung aufgezeigten Verstellvorschrift.

Weitere Ausführungen einerseits zur erfindungsgemäßen Vorrichtung und andererseits zum erfindungsgemäßen Verfahren erübrigen sich an dieser Stelle unter Hinweis auf den allgemeinen Teil der Beschreibung.

Abschließend sei darauf hingewiesen, dass das voranstehend erörterte Ausführungsbeispiels lediglich der beispielhaften Erörterung der beanspruchten Lehre dient, diese jedoch nicht auf das Ausführungsbeispiel - Strahlengang bei der STED-Mikroskopie - einschränkt. Gleiches gilt für das erfindungsgemäße Verfahren.

**Bezugszeichenliste**

| 1 | Lichtquelle |
| --- | --- |
| 2 | Lichtquelle |
| 3 | Beleuchtungslichtblende |
| 4 | Beleuchtungslichtblende |
| 5 | Linsensystem |
| 6 | Linsensystem |
| 7 | Strahlvereiniger |
| 8 | Strahl, Strahlengang |
| 9 | Strahl, Strahlengang |
| 10 | Beleuchtungsstrahlengang |
| 11 | Strahlteiler/Strahlvereiniger |
| 12 | Beleuchtungslicht |
| 13 | Scaneinrichtung |
| 14 | Scanspiegel |
| 15 | Linsenanordnung |
| 16 | Objektiv |
| 17 | Probe |
| 18 | Detektionslicht |
| 19 | Linsensystem |
| 20 | Detektionslichtblende |
| 21 | Detektor |
| 22 | Kalibrierpräparat |
| 23 | Oberflächenstruktur |
| 24 | Durchgang, Drehachse |
| 25 | Anschlag (am Kalibrierpräparat) |
| 26 | Stellelement |

**Patentansprüche**

1. Vorrichtung zur Strahljustage in einem optischen Strahlengang mit mindestens zwei voneinander unabhängigen Lichtquellen (1, 2), insbesondere in einem Strahlengang (8, 9) eines vorzugsweise hoch- bzw. höchstauflösenden Mikroskops, wobei die Strahlen der Lichtquellen (1, 2) in einem gemeinsamen Beleuchtungsstrahlengang (10) zu überlagern sind,
**dadurch gekennzeichnet, dass** ein Kalibrierpräparat (22) in den Beleuchtungsstrahlengang (10) ein- und aus diesem ausbringbar ist, anhand dessen die Pupillen- und/oder Fokuslage der Strahlen (8, 9) überprüfbar ist.

2. Vorrichtung nach Anspruch 1, **dadurch gekennzeichnet, dass** das Kalibrierpräparat (22) in den Beleuchtungsstrahlengang (10) einschwenkbar ist.

3. Vorrichtung nach Anspruch 1 oder 2, **dadurch gekennzeichnet, dass** das Kalibrierpräparat (22) an der Stelle oder in der Nähe des Zwischenbildes in den Beleuchtungsstrahlengang (10) einbringbar ist.

4. Vorrichtung nach einem der Ansprüche 1 bis 3, **dadurch gekennzeichnet, dass** das Kalibrierpräparat (22) eine Oberflächenstruktur (23) aufweist.

5. Vorrichtung nach Anspruch 4, **dadurch gekennzeichnet, dass** die Oberflächenstruktur (23) definiert, vorzugsweise geordnet oder symmetrisch, ausgebildet ist.

6. Vorrichtung nach Anspruch 4, **dadurch gekennzeichnet, dass** die Oberflächenstruktur (23) willkürlich, ungeordnet oder symmetrielos ausgebildet ist.

7. Vorrichtung nach einem der Ansprüche 4 bis 6, **dadurch gekennzeichnet, dass** die Oberfläche des Kalibrierpräparats (22) mikrostrukturiert ist.

8. Vorrichtung nach Anspruch 4, **dadurch gekennzeichnet, dass** die Oberfläche des Kalibrierpräparats (22) sandgestrahlt oder glasperlengestrahlt ist.

9. Vorrichtung nach einem der Ansprüche 1 bis 8, **dadurch gekennzeichnet, dass** zur Detektion des Detektionslichts (18) der zu überlagernden Strahlen (8, 9) spektral selektive Detektoren (21) vorgesehen sind.

10. Vorrichtung nach einem der Ansprüche 1 bis 8, **dadurch gekennzeichnet, dass** zur Detektion des Detektionslichts (18) der zu überlagernden Strahlen (8, 9) die Lichtquellen (1, 2) einzeln bzw. sequentiell anschaltbar und deaktivierbar sind.

11. Vorrichtung nach einem der Ansprüche 1 bis 10, **dadurch gekennzeichnet, dass** zu Justagezwecken mindestens ein Stellelement (26) zur Beeinflussung der Pupillen- und/oder Fokuslage zumindest eines der zu vereinigenden Strahlen (8, 9) vorgesehen ist.

12. Vorrichtung nach Anspruch 11, **dadurch gekennzeichnet, dass** das Stellelement (26) bzw. die Stellelemente (26) jeweils im Strahlengang (8, 9) der zu vereinigenden Strahlen angeordnet ist bzw. sind.

13. Vorrichtung nach Anspruch 11, **dadurch gekennzeichnet, dass** das Stellelement (26) in der Pupille des Strahlengangs (8, 9) oder in der Nähe der Pupille angeordnet ist.

14. Vorrichtung nach Anspruch 11, **dadurch gekennzeichnet, dass** das Stellelement (26) in der Nähe eines Zwischenbildes angeordnet ist.

15. Vorrichtung nach Anspruch 11, **dadurch gekennzeichnet, dass** Stellelemente (26) in der Pupille des Strahlengangs (8, 9) bzw. in deren Nähe oder in der Nähe eines Zwischenbildes angeordnet sind.

16. Vorrichtung nach einem der Ansprüche 11 bis 15, **dadurch gekennzeichnet, dass** als Stellelement (26) ein vorzugsweise um zwei Achsen kippbarer Spiegel vorgesehen ist.

17. Vorrichtung nach Anspruch 16, **dadurch gekennzeichnet, dass** der Spiegel motorisiert bewegbar ist.

18. Vorrichtung nach einem der Ansprüche 1 bis 17, **dadurch gekennzeichnet, dass** zur Ermittlung des Versatzes der den Strahlen (8, 9) zugeordneten Abbildungen die Maximalposition einer 2D-Kreuzkorrelation heranziehbar ist.

19. Vorrichtung nach einem der Ansprüche 1 bis 18, **dadurch gekennzeichnet, dass** als Messgröße für den Versatz die detektierte Intensität des Strahls (8, 9) dient.

20. Vorrichtung nach einem der Ansprüche 1 bis 19, **dadurch gekennzeichnet, dass** zur Ermittlung der jeweiligen Strahllage teildurchlässige Spiegel und/oder positionsempfindliche Sensoren vorgesehen sind.

21. Verfahren zur Strahljustage in einem optischen Strahlengang mit mindestens zwei voneinander unabhängigen Lichtquellen (1, 2), insbesondere in einem Strahlengang eines vorzugsweise hoch- bzw. höchstauflösenden Mikroskops, wobei die Strahlen der Lichtquellen (1, 2) in einem gemeinsamen Beleuchtungsstrahlengang (10) überlagert werden, insbesondere zur Anwendung einer Vorrichtung nach einem der Ansprüche 1 bis 20, **dadurch gekennzeichnet, dass** ein Kalibrierpräparat (22) in den Beleuchtungsstrahlengang (10) ein- und aus diesem ausgebracht wird, anhand dessen die Pupillen- und/oder Fokuslage der Strahlen überprüft wird/werden.

Fig. 1

Fig. 2

EP 1 967 887 A1

```
                        ┌──────────┐
                        │  Start   │
                        └────┬─────┘
                             ↓
                          ╱────────╲        nein      ┌─────────────────────┐
                        ╱ Systemantwort ╲ ════════>   │  Testauslenkung und │
                        ╲  bekannt?     ╱             │ Antwortmatrix       │
                          ╲────────╱                   │ invertieren         │
                             ‖ ja                      └─────────────────────┘
                             ↓
                    ┌──────────────────┐
                    │    Sollwert-     │
                    │   Abweichung     │
                    │  bestimmen und   │
                    │ Stellelemente    │
                    │   korrigieren    │
                    └────────┬─────────┘
                             ↓
                          ╱────────╲
               nein     ╱ Abweichung ╲
            <════════   ╲ in Toleranz?╱
                          ╲────────╱
                             ‖ ja
                             ↓
                    ┌──────────────────┐
                    │      Ende        │
                    └──────────────────┘
```

**Fig. 3**

**Europäisches**
**Patentamt**

**EUROPÄISCHER RECHERCHENBERICHT**

Nummer der Anmeldung

EP 08 10 2291

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 99/42885 A (LEICA MICROSYSTEMS [DE]; ENGELHARDT JOHANN [DE]) 26. August 1999 (1999-08-26) * Seite 3, Zeile 8 - Seite 4, Zeile 16; Ansprüche 1-14,20-34; Abbildung 1 * ----- | 1-21 | INV. G02B21/06 |

| RECHERCHIERTE SACHGEBIETE (IPC) |
|---|
| G02B |

Der vorliegende Recherchenbericht wurde für alle Patentansprüche erstellt

| Recherchenort | Abschlußdatum der Recherche | Prüfer |
|---|---|---|
| München | 12. Juni 2008 | Daffner, Michael |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 08 10 2291

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-06-2008

| Im Recherchenbericht angeführtes Patentdokument | Datum der Veröffentlichung | Mitglied(er) der Patentfamilie | Datum der Veröffentlichung |
|---|---|---|---|
| WO 9942885 A | 26-08-1999 | EP 0978009 A2<br>JP 3721425 B2<br>JP 2001522479 T<br>US 6355919 B1 | 09-02-2000<br>30-11-2005<br>13-11-2001<br>12-03-2002 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- EP 0801759 B1
- EP 0491289 B1
- US 7064824 B2
- WO 2004090617 A2
- WO 2006127692 A2
- US 6859313 B2
- DE 10233074 A1